# EUROPEAN PATENT SPECIFICATION

(11) **EP 1 587 964 B1**
(45) Date of publication and mention of the grant of the patent: **20.08.2008**
(21) Application number: 04706573.5
(22) Date of filing: 30.01.2004
(51) Int. Cl.: C22B 3/14, C22B 23/00, C22C 1/02

(54) **PROCESS FOR NICKEL AND COBALT EXTRACTION FROM LATERITE ORES**
VERFAHREN ZUR EXTRAKTION VON NICKEL UND COBALT AUS LATERITERZEN
PROCEDE PERMETTANT D'EXTRAITE DU NICKEL ET DU COBALT A PARTIR DE MINERAIS DE LATERITE

(30) Priority: 30.01.2003 AU 2003900387
(43) Date of publication of application: 26.10.2005
(73) Proprietor: BHP Billiton SSM Technology Pty Ltd., Perth, WA 6000 (AU)
(72) Inventor: FRANCIS, Boyd, Ramon, Alice River Queensland 4817 (AU); REID, John, Graham, Indooroopilly Queensland 4068 (AU); BARNETT, Stephen, Charles, Crompton, Hendra Queensland 4011 (AU)
(74) Representative: Neill, Alastair William
(86) International application number: PCT/AU2004/000113
(87) International publication number: WO 2004/067787

(56) References cited:
- GB-A- 1 348 031
- US-A- 3 656 934
- US-A- 3 768 993
- US-A- 3 907 966
- US-A- 3 925 533
- US-A- 3 981 968
- US-A- 4 187 281
- US-A- 5 174 812
- US-B2- 6 383 460
- CARON M.H.: 'Ammonia leaching of nickel and cobalt ores' TRANSACTIONS OF THE AIME vol. 188, 1950, pages 67 - 90, XP009014944

## Description

### Field of the invention

In general, the present invention relates to an improved method for the extraction of nickel and cobalt from laterite ores. In particular the present invention provides an improved method of extraction of nickel and cobalt from nickel and cobalt containing laterite ores by selective reduction roasting of the ore in a rotary kiln followed by leaching of these metals with an aerated ammoniacal ammonium carbonate solution.

### Background of the Invention

Laterite nickel and cobalt ore deposits generally contain oxidic type ores, limonites, and silicate type ores, saprolites, in the same deposits. The higher nickel content saprolites tend to be treated by electrical smelting techniques to produce ferro nickel. The power requirements for the lower nickel content limonite and limonite/saprolite blends make this processing route too expensive, and these ores are normally treated by a combination of pyrometallurgical and hydrometallurgical processes.

The reduction roast-ammonium carbonate leach process is known, having been described originally by M.H.Caron in 1924. Commercial plants using the process are operating in Australia, Brazil, and Cuba. The process has been improved, but generally involves the steps of drying the ore to remove free moisture, grinding the ore, subjecting the ore to roasting in a reducing atmosphere, cooling the ore, and leaching the reduced ore in an aerated ammoniacal ammonium carbonate solution which dissolves the nickel and cobalt as ammine complexes. The nickel and cobalt can then be extracted from solution by a range of processes that might include solvent extraction, sulphide precipitation, a mixed carbonate precipitation by steam stripping the ammonia and carbon dioxide, or ion exchange. The modified Caron process as used by QNI in Australia uses an ammoniacal solvent extraction process (ASX), to separate the nickel and cobalt for further purification, and is described in Australian patent 605867.

The reduction roast of the laterite is typically carried out at around 750° C in an atmosphere rich in hydrogen and carbon monoxide generated by substoichiometric fuel firing, which reduces the nickel and cobalt compounds in the ore to metallic nickel and cobalt. An important feature of the reduction step is that the chosen conditions are such that the reduction is selective for nickel and cobalt while minimising reduction of the iron oxide content of the ore. Excessive formation of metallic iron can lead to undesirable impacts on the leaching step and the final recovery of nickel and cobalt. The selective reduction roast step is carried out in the commercial Caron type plants in Herreschoff type multiple hearth roasters. To achieve acceptable recovery of the nickel and cobalt, in addition to generating the reducing atmosphere, a reductant material, typically in the form of heavy fuel oil, is mixed with the ground ore before the roasting step to provide additional reducing conditions to maximize conversion of the nickel and cobalt to metallic form. Unfortunately, economically available heavy fuel oils contain high levels of sulphur, and while the basics of the Caron process and recent modifications of the same are known from patent 605867 and scientific literature, the effects of the sulphur species on the solution chemistry during the leaching and solvent extraction steps are less well documented.

Sulphur present as organo sulphur compounds in the fuel oil used for both pre reduction addition and combustion chamber firing reports largely to the ammoniacal ammonium carbonate liquor during aeration leaching, while the remainder is associated, in the form of metallic sulphides, with the ore solids discharged to landfill after counter current decantation washing and steam stripping to recover ammonia. These sulphide containing solids could over time result in sub soil water acidification which is environmentally undesirable. As an indication of the contribution of the sulphur in fuel oil to the process, nickel laterite ore typically contains 0.1 % to 0.2% sulphur, but after reduction roasting using heavy oil for both pre-reduction and combustion chamber firing, the cooled roasted ore can contain 0.3% to 0.35% sulphur. Typically 60% of this contained sulphur will dissolve in the ammoniacal ammonium carbonate leach liquor.

In the Caron process for recovery of nickel from the ammoniacal ammonium carbonate solution, the solution is steam distilled to remove the ammonia and carbon dioxide. The sulphur species present precipitate with the nickel forming a basic nickel sulphate / basic nickel carbonate mixture. In order to recover a sulphur free nickel product, this mixture is calcined at high temperatures to remove the sulphur as sulphur dioxide in the flue gas, which is an environmentally undesirable step.

In the modified Caron process as operated by QNI at its Yabulu Refinery and described in Patent AU605867, where solvent extraction recovers nickel from the ammoniacal ammonium carbonate leach liquor as a non ionic complex, the anionic sulphur species remain in solution largely as ammonium sulphate. This solution, following treatment to recover volatile ammonia and carbon dioxide for re use in the process, is either discharged to holding ponds or treated by reverse osmosis to render it less harmful to the environment. Ammonia, an expensive raw material, is lost to the process equivalent to the concentration of anionic sulphur species in solution.

There are a number of other impacts that the presence of sulphur species in solution have on the solvent extraction recovery of nickel from leach liquors in the modified Caron process.

If the solvent extraction side mixer settlers are not operated at high efficiency, entrainment of sulphur species in the loaded organic reagent can transfer sulphur to the nickel recovered during stripping, thus contaminating the final nickel product with sulphur.

Some of the sulphur from the roasting step reports into the leaching solution as thiosulphates. The level of thiosulphate present in the ammoniacal ammonium carbonate solution affects the valency state of the cobalt in solution, encouraging the formation of bivalent cobalt rather than the preferred trivalent state. In the modified Caron process using the solvent extraction nickel/cobalt separation step, this has the effect of increasing the requirement for the use of hydrogen peroxide, which is added to the nickel and cobalt containing solvent extraction stage feed liquor, to convert the majority of the cobalt to the trivalent state. Thiosulphate also increases the losses of cobalt as precipitate in the preliminary feed solution distillation step, and, by preventing complete oxidation of bivalent cobalt in the solvent extraction stage feed liquor, reduces the capacity of the solvent extraction section of the process by allowing bivalent cobalt to effectively poison the organic extractant used to extract the nickel from the feed solution, necessitating continuous organic reagent rehabilitation by acid cleaning and re-oximation, as disclosed by Australian patent AU612528.

Although sulphur addition to saprolite ore may be an advantage for the reduction roasting step (though not necessary for limonite roasting), its presence in the heavy oil reductant is not necessarily beneficial as it prevents optimum control of the sulphur to ore ratio.

A further limitation of commercial Caron type plants is that the multiple hearth roasters do not achieve the nickel and cobalt conversion efficiencies that can be obtained in a laboratory because of the poor gas - solids contact, internal bypassing of solids and reducing gas, and poor temperature control. The latter can result in under reduction because of low roaster temperature, or overheating of the ore which leads to irreversible loss of nickel by the formation of an olivine phase, a nickel magnesium silicon compound ((Ni,Mg)₂SiO₄). Many multiple hearth furnaces are required for each nickel and cobalt production facility. Typically, a multiple hearth furnace can process 25-30 tons per hour of laterite ore, requiring 12 to 24 units for an annual nickel capacity of 30,000 tons, making this part of the process highly capital intensive. They also incur high maintenance and operating costs because of the high energy consumption resulting from the poor thermal efficiencies and the pre mixing of heavy oil reductant with the ore.

A major improvement in the reduction roast-ammoniacal ammonium carbonate leach, would be a roasting step that could be carried out with fewer pieces of equipment, preferably one roasting unit, to reduce the capital cost, and that could achieve nickel and cobalt recovery levels approaching those obtained in the laboratory, while minimizing the direct addition of reductant and consequently sulphur, and resulting in significantly reduced energy consumption. It would therefore be desirable to provide an improved process of this type.

Indeed, there have been a number of reported attempts to produce improved processes aimed at overcoming one or more of the deficiencies noted above.

For example, Mohanty et al conducted laboratory fluidized bed trials on an Indian limonite and reported nickel and cobalt recoveries of 90% and 70% respectively. Internal study reports by the Applicant describe fluid bed roasting testwork achieving nickel and cobalt recovery successfully but producing ore accretions that precluded further development.

Rotary kilns are used for non selective partial reduction of saprolite type ores in the production of ferro nickel where the target is to reduce both the iron and nickel contents of the ore before a final electrical smelting step to produce the metals. In this process the feed ore is not ground, and complete reduction is not targeted. Coal or coke as a reductant is usually added with the ore feed at five parts reductant for ninety five parts ore.

GB patent 1348031 describes the selective reduction of an Indian laterite ore followed by leaching of the nickel and cobalt in ammonia - ammonium carbonate solution based on laboratory tests. It claims that the reduction can be conducted in either a vertical kiln (fluid bed or multiple hearth) or a horizontal rotary kiln by indirect or direct heating, but uses high ratios of reductant addition at 3 to 6 parts fuel oil per 100 parts of dry calcined ore, with the example quoted at 4.5 parts fuel oil. At these addition rates the economies of the process are unsatisfactory.

US patent 5174812 discloses a process for the separation and recovery of nickel from an ammoniacal ammonium carbonate liquor containing nickel II ions and cobalt III ions by liquid-liquid extraction where ammoniacal ammonium carbonate solutions are the only aqueous phases involved in the process.

A normal feature of laterite roast testwork is that laboratory size testwork gives better indicated metal recoveries than are achieved with medium sized pilot equipment or operating plant. This is addressed in US patent 3656934 which describes the selective reduction of limonite ore containing between 38 and 46 % iron and about 1.5% nickel in a rotary kiln 50 feet in length and 3 feet diameter in preparation for subsequent ammonia leaching achieving extractions of over 80% for nickel. The U.S. patent claims a complex modification to add reducing gas at several positions along the kiln, and states that up to 5% of coal and 1% of a sulphide such as pyrites may be added to the feed ore.

The absence of sulphur in Caron type circuits and in particular the modified Caron circuit which includes a solvent extraction step, would have very significant economical and environmentally beneficial effects and any sulphur free process that resulted in similar or improved metal recoveries than currently obtained would be of a major benefit.

The above discussion of documents, articles and the like is included in the specification solely for the purpose of providing a context for the present invention. It is not suggested or represented that any or all of these matters formed part of the prior art base or were common general knowledge in the field relevant to the present invention as it existed in Australia before the priority date of each claim of this application.

The present invention aims to overcome or at least alleviate one or more of the difficulties associated with the prior art.

The present invention resides in a method for the recovery of nickel and cobalt from nickel and cobalt containing laterite ores, said method comprising:
a) roasting feed ore in a reducing atmosphere in a rotary kiln to selectively reduce the nickel and cobalt, wherein either no, or less than 2.5% w/w reductant is added to the feed ore prior to roasting;
b) leaching the reduced ore with an aerated ammoniacal ammonium carbonate solution to extract the nickel and cobalt into a leach solution; and
c) separating the leach solution from the ore tailings and recovering the nickel and cobalt by a process selected from ammoniacal solvent extraction, precipitation techniques or ion exchange.

The applicants have surprisingly found that efficient extraction of nickel and cobalt can be achieved using a rotary kiln for reduction roasting of the ground feed ore prior to ammoniacal ammonium carbonate leaching. Most beneficially, the applicants have found that when a rotary kiln is used, there is no need to add reductant to the feed ore or at most, only add up to 2.5 w/w heavy oil as reductant. Preferably less than 1% w/w reductant is added, but most preferably no reductant is added.

An advantage of using a rotary kiln with little or no added reductant is that added reductants such as heavy oil contain high levels of sulphur which is normally dissolved in the ammoniacal ammonium carbonate leach liquor during the leaching step as thiosulphate or sulphate. This results in increased ammonia losses.

Further, in a preferred form of the process where the nickel and cobalt is subsequently recovered by solvent extraction, the cobalt must be present in the trivalent state to achieve adequate separation of the nickel and cobalt. The presence of thiosulphate generated from the sulphur present in the heavy oils used as reductants encourages the formation of bivalent cobalt rather than the trivalent state. Hydrogen peroxide is added to the leach solution to convert bivalent cobalt to trivalent cobalt for a process that involves a solvent extraction step. Minimizing the sulphur dissolved in the leach liquor by elimination or reduction of sulphur containing reductant use in the reduction roast reduces the need to use excess hydrogen peroxide to achieve conversion of cobalt to the trivalent state.

Accordingly, in a preferred embodiment of the invention, the nickel and cobalt is extracted from the ammoniacal leach solution by solvent extraction. The preferred reagent for the solvent extraction is 2-hydroxy-5-t-nonyl acetophenone oxime dissolved in a kerosene type carrier. Alternative reagents may include other oxime reagents or substituted beta diketone types. Reduced sulphur levels in the process of the present invention results in lower cobalt losses, reduced hydrogen peroxide use, and increased capacity of the solvent extraction step of the process.

Significant cost reduction can also be achieved as a rotary kiln, which can replace 12 or more multiple hearth furnaces is less capital intensive, and the reductants themselves are expensive and a major portion of the processing costs.

In the method of the invention, dried and ground laterite ore, which may be limonitic, saprolitic, or a blend of the two, is fed into a rotary kiln of the type well known in the art which is fired sub-stoichiometricaly at the ore discharge end to produce a reducing atmosphere in the kiln. A reducing atmosphere is maintained in the rotary kiln by controlling the hydrogen and carbon monoxide levels in the kiln atmosphere. It has been found that this is sufficient to achieve selective reduction of the nickel and cobalt making the reduced ore suitable for leaching with aerated ammoniacal ammonium carbonate solution. Alternatively, as little as up to 2.5% w/w of a reductant such as a heavy oil may be added to the ground ore before roasting, as may be desired to maximise reduction of the nickel and cobalt present.

The temperature in the reduction zone of the kiln may typically vary between 600°C and 850°C, but will preferably be between 700°C and 810°C. The kiln may be fired by any type of fuel oil or gas, preferably a low sulphur fuel oil or gas, most preferably gas, and the combustion air controlled to achieve the required reducing hydrogen and carbon monoxide levels in the kiln atmosphere.

The overall residence time of the ore in the rotary kiln may be varied between 65 and 260 minutes by adjustment of the kiln speed, and the residence time of the ore in the reducing zone of the kiln , where the temperature is above 600°C, may vary between 13 minutes and 52 minutes.

The reduced ore discharged from the kiln is directly amenable to a conventional ammoniacal/ammonium carbonate leach to recover the nickel and cobalt values. In the method of the invention the reduced ore is typically indirectly cooled to between 150°C and 300°C in a non oxidizing atmosphere and mixed with an ammoniacal ammonium carbonate solution containing between 70 grams per litre and 150 grams per litre ammonia and between 50 grams per litre and 100 grams per litre carbon dioxide. The slurry, formed by the mixing of the reduced ore with the ammoniacal ammonium carbonate solution, is agitated and aerated to achieve dissolution of nickel and cobalt as ammine complexes. The slurry may be cooled by refrigeration or a combination of refrigeration and conventional slurry cooling. The leach typically takes place at temperatures between 35°C and 60°C and at atmospheric pressure. The pregnant solution containing nickel and cobalt values is separated from the ore tailings and may be treated by a variety of known processes to recover the nickel and cobalt, such as solvent extraction, precipitation techniques, or ion exchange, but preferably solvent extraction.

### Examples

By way of example, three laterite ore samples, a limonite, a saprolite and a 7:3 weight ratio limonite/ saprolite blend were dried, finely ground and subjected to a selective reduction roast in a rotary kiln which is 10 meters long and 0.4 meters in diameter. The kiln operated continuously at 45 kg of ore throughput per hour, and the reducing atmosphere was provided by sub stoichiometric gas firing in a combustion chamber entering at the ore discharge end of the kiln. Kiln temperatures were varied from 700°C to 780°C. Tests where carried out without and with heavy fuel oil as reductant addition to the feed ore. Kiln rotation speed was adjusted to vary ore residence time. The roasted ore exiting the kiln was indirectly cooled to less than 100°C under inert gas and leached in aerated ammoniacal ammonium carbonate solution containing 100g/l NH₃ and 80g/l CO₂.
The initial dry ore analysis of the samples is indicated in table 1.

**Table 1. Concentration of Fe, Ni, Co, in Ores**

| **Sample** | **% Fe** | **% Ni** | **% Co** |
|---|---|---|---|
| Saprolite | 14.19 | 1.73 | 0.06 |
| Blend | 33.92 | 1.69 | 0.13 |
| Limonite | 43.20 | 1.57 | 0.22 |

### Example 1 (with heavy oil reductant added)

Table 2 summarizes the maximum and average recoveries obtained for each ore for the full series of tests and compares them to what might be obtained from a well operated Hereschoff multiple hearth furnace. As can be seen, the recoveries represent a significant improvement over the multiple hearth furnace typical recoveries, and are much closer to those obtained in laboratory tests.

**Table 2. Recovery of Ni and Co**

| | | % Recovery in rotary Kiln | | % Recovery in a well operated Multiple Hearth Furnace | |
|---|---|---|---|---|---|
| | | Nickel | Cobalt | Nickel | Cobalt |
| Limonite | Max | 96.4 | 95.6 | | |
| | Avg | 94.3 | 91.7 | 84.5 | 76.0 |
| Saprolite | Max | 97.6 | 89.1 | | |
| | Avg | 82.9 | 83.6 | 75.0 | 70.0 |
| Blend | Max | 95.2 | 96.0 | | |
| | Avg | 92.4 | 92.6 | 84.0 | 75.0 |

The majority of the results which contributed to the Table 2 averages were obtained using a heavy oil reductant addition to ore feed of 2.5% by weight, which is equivalent to the typical reductant ratio in use in commercial multiple hearth furnaces, but significantly lower than that taught in the prior art for rotary kilns.

### Example 2 (no heavy oil reductant added)

Of greater significance however, was the reduction roast of limonite with no heavy oil reductant addition to the ore. The nickel and cobalt recoveries were excellent as demonstrated in Table 3, and indicated no appreciable loss of recovery compared to the use of 2.5% reductant. The simulated ammoniacal ammonium carbonate leach results are included to demonstrate the combined effect of the selective reduction roast in a rotary kiln, with no heavy oil added, combined with the aerobic leach, and the anaerobic leach which occurs during counter current washing of tailings in a typical process.

**Table 3. Recovery of Ni and Co obtained with no added reductant.**

| | | % recovery in rotary kiln roast | | % recovery of Combined Rotary kiln reduction roast and ammoniacal ammonium carbonate Leach | |
|---|---|---|---|---|---|
| | | Nickel | Cobalt | Nickel | Cobalt |
| Limonite | Max | 93 | 93.2 | 93.2 | 69.1 |
| | Avg | 92 | 85 | 92.7 | 66.5 |

### Example 3 Reduction of a limonite/saprolite blend under varied conditions

A second 7:3 weight ratio limonite saprolite blend was subjected to a series of selective reduction roasts in the rotary kiln used in Examples 1 and 2. Roaster temperature and kiln rotating speed were varied.

The ore blend tested analysed 1.86% Ni, 0.17% Co, 35.5% Fe and 0.13% C. Nickel reduction efficiencies of up to 90.8% and cobalt reduction efficiencies of 89.4 % were achieved without the use of heavy oil as reductant as shown in units 2 to 7 of Table 4 which were comparable to the efficiencies achieved where 2.5% reductant was added (unit 1).

**Table 4.**

| | | | | | | | | |
|---|---|---|---|---|---|---|---|---|
| **Test period** | **Unit** | **1** | **2** | **3** | **4** | **5** | **6** | **7** |
| Period duration | Hours | 13 | 22 | 14 | 10 | 10 | 7 | 43.5 |
| Reduction temperature | °C | 809 | 801 | 761 | 848 | 803 | 802 | 802 |
| Fixed carbon | % | 1.4 | 0.4 | 0.4 | 0.3 | 0.5 | 0.4 | 0.6 |
| Kiln outlet hydrogen | % vol. dry basis | 15.3 | 15.1 | 14.1 | 15.3 | 14.8 | 14.7 | 15.6 |
| Kiln outlet carbon monoxide | % vol. dry basis | 7.1 | 7.4 | 7.0 | 9.0 | 8.5 | 8.3 | 8.1 |
| Kiln retention time | mins | 260 | 260 | 260 | 260 | 65.5 | 130 | 260 |
| Retention time in hot reduction zone | mins | 51 | 51 | 51 | 51 | 13 | 26 | 51 |
| Oil feed rate | % wt of ore | 2.5 | 0 | 0 | 0 | 0 | 0 | 0 |
| Nickel recovery efficiency | % | 92.0 | 88.7 | 88.7 | 87.7 | 89.2 | 88.6 | 90.8 |
| Cobalt recovery efficiency | % | 92.4 | 81.2 | 89.0 | 86.9 | 89.3 | 85.4 | 89.4 |

### Example 4

A beneficiated limonite ore of composition nickel 1.96%, cobalt 0.1 %, and iron 20.8% was dried, finely ground and subjected to a selective reduction roast in the rotary kiln described for the previous Examples. Tests were carried out with (unit 1 of Table 5) and without (units 2 and 3) reductant and with varied retention time in the kiln. The roasted ore exiting the kiln was indirectly cooled to less than 100°C under inert gas and leached in aerated ammoniacal ammonium carbonate solution containing 100g/l NH₃ and 80g/l CO₂.

The tests demonstrated that even without reductant, and with a relatively low retention period in the reduction zone, the extraction of nickel and cobalt was significantly better than is achieved in multiple hearth roasters.

**Table 5.**

| | | | | |
|---|---|---|---|---|
| Test period | Unit | 1 | 2 | 3 |
| Period duration | Hour s | 17 | 20 | 20 |
| Reduction temperature | °C | 803 | 799 | 805 |
| Fixed carbon | % | 1.6 | 0.5 | 0.9 |
| Kiln outlet hydrogen | % vol dry basis | 16.4 | 17.9 | 16.2 |
| Kiln outlet carbon monoxide | % vol dry basis | 7.2 | 8.1 | 7.5 |
| Kiln retention time | mins | 260 | 260 | 65 |
| Retention time in hot reduction zone | mins | 51 | 51 | 13 |
| Oil feed rate | % wt of ore | 2.5 | 0 | 0 |
| Nickel Recovery efficiency | % | 92.0 | 88.1 | 89.5 |
| Cobalt Recovery efficiency | % | 75.4 | 67.3 | 75.9 |

Examples two to four above demonstrate that the combination of a reduction roast in a rotary kiln with no reductant, followed by an ammoniacal ammonium carbonate leach for the extraction of nickel and cobalt from laterite ores as described by this invention, can produce recoveries equal to or better than the best operated multiple hearth furnaces. This invention achieves the process improvements that will allow one rotary kiln roaster to replace several multiple hearth units, and improve the recovery of nickel and cobalt. Reduction or elimination of the sulphur containing heavy fuel oil reductant normally used, will significantly improve energy efficiencies, and achieve major benefits in the reduction roast, ammoniacal ammonium carbonate leach recovery of nickel and cobalt, particularly when the solvent extraction process is used to extract the nickel and cobalt from the leach solution.

The above description is intended to be illustrative of the preferred embodiment of the present invention. It should be understood by those skilled in the art, that many variations or alterations may be made without departing from the scope of the invention.

## Claims

1. A method for the recovery of nickel and cobalt from nickel and cobalt containing laterite ores, said method comprising:
a) roasting feed ore in a reducing atmosphere in a rotary kiln to selectively reduce the nickel and cobalt, wherein either no, or less than 2.5% w/w reductant is added to the feed ore prior to roasting;
b) leaching the reduced ore with an aerated ammoniacal ammonium carbonate solution to extract the nickel and cobalt into a leach solution; and
c) separating the leach solution from the ore tailings and recovering the nickel and cobalt by a process selected from ammoniacal solvent extraction, precipitation techniques or ion exchange.

2. A process according to claim 1 wherein less than 1% w/w reductant is added.

3. A process according to claim 1 wherein there is no reductant added.

4. A process according to claims 1 or 2, wherein if a reductant is added, the reductant is heavy oil.

5. A process according to claim 1 wherein the nickel and cobalt is recovered from the leach solution by ammoniacal solvent extraction.

6. A process according to claim 5 wherein the reagent for the solvent extraction is selected from an oxime reagent or a substituted beta diketone reagent.

7. A process according to claims 5 or 6 wherein the reagent is 2-hydroxy-5-t-nonyl acetophenone oxime dissolved in a kerosene type carrier.

8. A process according to any one of the preceding claims wherein the reducing atmosphere is created in the kiln by firing the kiln sub-stoichiometricaly at the ore discharge end with any type of fuel oil or gas, and maintaining the reducing atmosphere by controlling the hydrogen and carbon monoxide levels in the kiln atmosphere.

9. A process according to claim 8 wherein the fuel oil or gas is low sulphur containing fuel oil or gas.

10. A process according to claim 1 or 2 wherein the reductant, if present, is added to the ground ore before roasting.

11. A process according to claim 1 wherein the temperature in the reduction zone of the kiln is between 600°C and 850°C.

12. A process according to claim 11 wherein the temperature in the reduction zone of the kiln is between 700°C and 810°C.

13. A process according to claim 1 wherein the residence time of the ore in the rotary kiln reduction zone is between 13 minutes and 51 minutes.

14. A process according to claim 1 wherein the reduced ore is indirectly cooled to between 150°C and 300°C in a non oxidising atmosphere prior to mixing with the ammoniacal ammonium carbonate solution.

15. A process according to claim 1 wherein the ammoniacal ammonium carbonate solution contains between 70g/l and 150g/l ammonia and between 50g/l and 100g/l carbon dioxide.

16. A process according to claim 1 wherein a slurry is formed by the mixing of the reduced ore with the ammoniacal ammonium carbonate solution, said slurry being agitated and aerated to achieve dissolution of nickel and cobalt as ammine complexes in the leach solution.

17. A process according to claim 16 wherein the slurry is cooled and the leach takes place at a temperature of between 35°C and 60°C at atmospheric pressure.

18. A process according to claim 17 wherein the slurry is cooled by refrigeration, or a combination of refrigeration and conventional slurry cooling.

## Patentansprüche

1. Verfahren zur Gewinnung von Nickel und Kobalt aus Nickel und Kobalt enthaltenden lateritischen Erzen, wobei das Verfahren die Schritte umfasst,
a) dass das zugeführte Erz in einer reduzierenden Atmosphäre in einem Drehrohrofen geröstet wird, um selektiv das Nickel und Kobalt zu reduzieren, wobei entweder kein oder weniger als 2,5 Gew.-% Reduktionsmittel dem zugeführten Erz vor der Röstung zugefügt wird;
b) dass das reduzierte Erz mit einer durchlüfteten ammoniakalischen Ammoniumcarbonatlösung extrahiert wird, um Nickel und Kobalt in eine Extraktionslösung zu extrahieren; und
c) dass die Extraktionslösung von den Erzrückständen getrennt wird und Nickel und Kobalt durch einen Prozess, ausgewählt aus ammoniakalischer Lösungsextraktion, Ausfällungstechniken oder Ionenaustausch, gewonnen werden.

2. Verfahren nach Anspruch 1, wobei weniger als 1 Gew.-% Reduktionsmittel zugefügt wird.

3. Verfahren nach Anspruch 1, wobei kein Reduktionsmittel zugefügt wird.

4. Verfahren nach Anspruch 1 oder 2, wobei, wenn ein Reduktionsmittel zugefügt wird, das Reduktionsmittel ein Schweröl ist.

5. Verfahren nach Anspruch 1, wobei Nickel und Kobalt aus der Extraktionslösung durch ammoniakalische Lösungsextraktion gewonnen werden.

6. Verfahren nach Anspruch 5, wobei das Reagenz für die Lösungsextraktion ausgewählt ist aus einem Oximreagenz oder einem substituierten β-Diketonreagenz.

7. Verfahren nach Anspruch 5 oder 6, wobei das Reagenz 2-Hydroxy-5-t-nonylacetophenonoxim, gelöst in einem kerosinartigen Träger, ist.

8. Verfahren nach einem der vorhergehenden Ansprüche, wobei die reduzierende Atmosphäre in dem Brennofen durch substöchiometrisches Feuern des Brennofens an dem Ende des Erzauslasses mit irgendeiner Art von Heizöl oder Gas erzeugt wird, und die reduzierende Atmosphäre durch Kontrollieren des Wasserstoff-und Kohlenmonoxidgehalts in der Brennofenatmosphäre gehalten wird.

9. Verfahren nach Anspruch 8, wobei das Heizöl oder Gas ein Heizöl oder Gas mit niedrigem Schwefelgehalt ist.

10. Verfahren nach Anspruch 1 oder 2, wobei das Reduktionsmittel, wenn vorhanden, vor der Röstung dem Bodenerz zugefügt wird.

11. Verfahren nach Anspruch 1, wobei die Temperatur in der Reduktionszone des Brennofens zwischen 600°C und 850°C liegt.

12. Verfahren nach Anspruch 11, wobei die Temperatur in der Reduktionszone des Brennofens zwischen 700°C und 810°C liegt.

13. Verfahren nach Anspruch 1, wobei die Verweilzeit des Erzes in dem Drehrohrofen zwischen 13 Minuten und 51 Minuten beträgt.

14. Verfahren nach Anspruch 1, wobei das reduzierte Erz indirekt auf eine Temperatur zwischen 150°C und 300°C in einer nicht oxidierenden Atmosphäre gekühlt wird, bevor es mit der ammoniakalischen Ammoniumcarbonatlösung vermischt wird.

15. Verfahren nach Anspruch 1, wobei die ammoniakalische Ammoniumcarbonatlösung zwischen 70 g/l und 150 g/l Ammoniak und zwischen 50 g/l und 100 g/l Kohlendioxid enthält.

16. Verfahren nach Anspruch 1, wobei eine Anschlämmung durch Vermischen des reduzierten Erzes mit der ammoniakalischen Ammoniumcarbonatlösung gebildet wird, wobei die Anschlämmung gerührt und durchlüftet wird, um eine Lösung des Nickels und Kobalts als Aminkomplex in der Extraktionslösung zu erzielen.

17. Verfahren nach Anspruch 16, wobei die Anschlämmung gekühlt wird und die Extraktion bei einer Temperatur zwischen 35°C und 60°C unter Atmosphärendruck stattfindet.

18. Verfahren nach Anspruch 17, wobei die Anschlämmung durch Kältetechnik gekühlt wird, oder durch eine Kombination von Kältetechnik und herkömmlicher Kühlung von Anschlämmungen.

## Revendications

1. Procédé permettant d'extraire du nickel et du cobalt de minerais de latérite contenant du nickel et du cobalt, ledit procédé comprenant :
a) le grillage du minerai d'alimentation sous une atmosphère réductrice dans un four rotatif pour réduire sélectivement le nickel et le cobalt, dans lequel aucun ou moins de 2,5 % en poids de réducteur sont ajoutés au minerai d'alimentation avant le grillage ;
b) la lixiviation du minerai réduit avec une solution ammoniacale aérée de carbonate d'ammonium pour extraire le nickel et le cobalt dans une solution de lixiviation ; et
c) la séparation de la solution de lixiviation des résidus de traitement du minerai et l'extraction du nickel et du cobalt par l'intermédiaire d'un procédé choisi parmi une extraction avec un solvant ammoniacal, des techniques de précipitation ou l'échange d'ions.

2. Procédé selon la revendication 1, dans lequel moins de 1 % en poids de réducteur est ajouté.

3. Procédé selon la revendication 1, dans lequel aucun réducteur n'est ajouté.

4. Procédé selon la revendication 1 ou 2, dans lequel si un réducteur est ajouté, le réducteur est une huile lourde.

5. Procédé selon la revendication 1, dans lequel le nickel et le cobalt sont récupérés de la solution de lixiviation par extraction avec un solvant ammoniacal.

6. Procédé selon la revendication 5, dans lequel le réactif pour l'extraction avec solvant est choisi parmi un réactif à base d'oxime ou un réactif à base de bêta dicétone substituée.

7. Procédé selon la revendication 5 ou 6, dans lequel le réactif est l'oxime de 2-hydroxy-5-t-nonyl acétophénone dissous dans un support de type kérosène.

8. Procédé selon l'une quelconque des revendications précédentes, dans lequel l'atmosphère réductrice est créée dans le four en chauffant le four de manière sous-stoechiométrique au niveau de la sortie de décharge du minerai avec n'importe quel type de fioul ou de gaz, et en maintenant l'atmosphère réductrice en contrôlant les taux d'hydrogène et de monoxyde de carbone dans l'atmosphère du four.

9. Procédé selon la revendication 8, dans lequel le fioul ou le gaz est un fioul ou un gaz à faible teneur en soufre.

10. Procédé selon la revendication 1 ou 2, dans lequel le réducteur, s'il est présent, est ajouté au minerai broyé avant le grillage.

11. Procédé selon la revendication 1, dans lequel la température dans la zone de réduction du four est comprise entre 600°C et 850°C.

12. Procédé selon la revendication 11, dans lequel la température dans la zone de réduction du four est comprise entre 700°C et 810°C.

13. Procédé selon la revendication 1, dans lequel le temps de présence du minerai dans la zone de réduction du four rotatif est entre 13 minutes et 51 minutes.

14. Procédé selon la revendication 1, dans lequel le minerai réduit est refroidi indirectement entre 150°C et 300°C sous une atmosphère non oxydante avant le mélange avec la solution ammoniacale de carbonate d'ammonium.

15. procédé selon la revendication 1, dans lequel la solution ammoniacale de carbonate d'ammonium contient entre 70 g/L et 150 g/L d'ammoniaque et entre 50 g/L et 100 g/L de dioxyde de carbone.

16. Procédé selon la revendication 1, dans lequel une pulpe est formée par le mélange du minerai réduit avec la solution ammoniacale de carbonate d'ammonium, ladite pulpe étant agitée et aérée pour réaliser la dissolution du nickel et du cobalt sous forme de complexes d'amine dans la solution de lixiviation.

17. Procédé selon la revendication 16, dans lequel la pulpe est refroidie et la lixiviation a lieu à une température située entre 35°C et 60°C à pression atmosphérique.

18. Procédé selon la revendication 17, dans lequel la pulpe est refroidie par réfrigération, ou par une combinaison de réfrigération et de refroidissement classique de pulpe.
